# FASCICULE DE BREVET EUROPEEN

(11) **EP 1 581 760 B1**
(45) Date de publication et mention de la délivrance du brevet: **02.05.2007**
(21) Numéro de dépôt: 03815558.6
(22) Date de dépôt: 08.12.2003
(51) Int. Cl.: F16L 1/20

(54) **Installation de fabrication des conduites tubulaires rigides enroulées**
Herstellungseinheit für starrgewalzte Rohrleitung
Production Unit for Rigid Rolled Tubular Pipe

(30) Priorité: 30.12.2002 FR 0216867
(43) Date de publication de la demande: 05.10.2005
(73) Titulaire: Technip France, 92400 Courbevoie (FR)
(72) Inventeur: HOFFMANN, Philippe, F-75017 Paris (FR); THOMAS, Pierre-Armand, F-92800 Puteaux (FR)
(74) Mandataire: Bertrand, Didier
(86) Numéro de dépôt international: PCT/FR2003/003627
(87) Numéro de publication internationale: WO 2004/068015

(56) Documents cités:
- EP-B- 0 868 621
- US-A- 4 117 692
- US-A- 5 346 333

## Description

La présente invention se rapporte à une installation pour la fabrication d'une conduite tubulaire rigide enroulée.

Les conduites tubulaires rigides ainsi enroulées sont destinées à être déroulées et redressées pour être installées par un navire de pose dans les fonds sous-marins, dans le but, notamment, de transporter des hydrocarbures. Cette technique de pose de conduite est dite « de rigide déroulée », (« reeled pipe system » en anglais)

Dans le domaine de l'exploitation pétrolière, les conduites flexibles sont distinguées des conduites rigides. On se référera aux spécifications API 17B et 17J de l'American Petroleum Institute pour la définition des conduites flexibles et à la spécification API 17 A pour la définition des conduites rigides ; on rappelle que les conduites flexibles ont un rayon minimal de flexion sans endommagement (souvent appelé MBR, « minimum bending radius ») relativement petit (par exemple de quelques mètres) par opposition aux conduites rigides dont le rayon minimal de courbure sans déformation plastique est relativement grand (par exemple plusieurs dizaines de mètres).

En outre, pour une conduite flexible le MBR correspond à une limite avant un endommagement irréversible alors que dans le cas d'une conduite rigide, le rayon minimal de flexion correspond à l'apparition d'une déformation plastique qui est réversible par redressement.

Des systèmes de pose pour les conduites rigides sont décrits dans la spécification API 17 A et on y distingue deux types de pose, selon que les tronçons de conduite sont soudés en mer (« stove piping ») ou soudés à terre (« reeled pipe »).

Le premier type de pose comporte lui-même trois grandes subdivisions, la pose dite en « S », celle en « J » et celle en « G ».

Selon la technique de pose dite en « S », on assemble horizontalement sur le pont du navire les tronçons de conduite pour former la conduite et on lui fait suivre, dans une colonne d'eau un trajet en forme de « S » avec un point d'inflexion et à très grand rayon de courbure de manière à empêcher qu'elle se déforme plastiquement. La conduite quitte le navire sous un angle oblique par rapport à la surface de l'eau, à l'aide d'une gouttière (en anglais « stinger ») inclinée. Cette technique ne convient qu'aux faibles et moyennes profondeurs de pose, car sinon, le poids de la chaînette de conduite déjà posée risquerait de couder et déformer plastiquement la conduite au niveau où elle sort de la gouttière. C'est pourquoi d'autres techniques ont dû être développées pour les plus grandes profondeurs d'eau.

Selon la technique de pose dite en « J », les tronçons de conduite sont assemblés sur une tour inclinable du navire de pose que l'on positionne au voisinage de la verticale, les tronçons étant ainsi soudés les uns aux autres dans la direction de pose de la conduite, ce qui évite toute déformation plastique à ce stade, la conduite assemblée étant ensuite immergée toujours sans déformation plastique. L'inclinaison de la tour est notamment fonction de la profondeur d'eau et elle permet d'éviter le point d'inflexion existant dans la technique de pose en « S ». On se référera au document US 5 464 307 pour illustrer cette technique de pose.

Selon la technique de pose dite en « G », illustrée notamment dans le document GB 2 287 518 A, des tronçons de conduite sont assemblés horizontalement sur le pont d'un navire comme dans le cas de la pose dite en « S » ; la conduite formée est envoyée vers l'avant du navire puis renvoyée vers l'arrière par une large roue entraînant une déformation plastique de la conduite, après quoi celle-ci passe dans des redresseurs et une succession de tensionneurs multi-chenilles, puis est larguée dans l'eau sous une certaine inclinaison qui peut être choisie en fonction de la profondeur d'eau pour éviter de déformer plastiquement la conduite au niveau de la chaînette immergée. Selon une variante décrite dans le document GB 2 296 956 A, la conduite préalablement assemblée par tronçons sur le pont est envoyée sur une goulotte arquée placée au sommet d'une rampe inclinable pourvue de tensionneurs ou de mâchoires de serrage ; les deux inflexions que subit la conduite entraînent des déformations plastiques de la conduite et rendent nécessaire l'utilisation des redresseurs. La vitesse de pose selon la technique dite en « G » est relativement faible.

Le second type de pose de conduites rigides, par tronçons soudés à terre, dite du « rigide déroulé » (en anglais « reeled pipe system »), est illustrée par exemple par le document GB 2 025 566 A, où la conduite, qui a été soudée en tronçons de grande longueur (supérieure à 1 km, par exemple) à quai, est ensuite enroulée avec déformation plastique autour d'une bobine verticale (qui peut atteindre de 15 à 20 mètres de diamètre) située sur le navire de pose amarré au quai.

L'assemblage de la conduite à quai s'effectue dans une base d'assemblage appelée « spool base » et la longueur des tronçons dépend de l'espace dont on dispose. L'enroulement du pipe consiste à enrouler un premier tronçon puis à cesser l'enroulement pour lui raccorder un deuxième tronçon par soudure. Cette soudure doit être contrôlée puis recouverte par « coating » afin de la préserver de la corrosion notamment. Ces opérations sont longues et retardent d'autant plus le chargement du bateau de pose.

Après que le navire de pose a rejoint la zone de pose, la conduite est déroulée à nouveau de la bobine avec déformation plastique et elle passe dans un redresseur-trancanneur avant d'être reprise par les convoyeurs à chenille d'une rampe de pose inclinable prévue dans une zone d'immersion de conduite à l'arrière du navire et dont l'inclinaison est choisie en fonction de la profondeur de pose.

Afin que les navires de pose soient immobilisés le moins longtemps possible pour d'autres opérations que celle de la pose proprement dite, et notamment pour le chargement des conduites rigides, on produit de nouvelles conduites rigides pendant que le bateau de pose immerge une conduite.

Un problème qui se pose et que vise à résoudre l'invention décrite dans le document EP 0 909 254 B1, est alors de fabriquer l'intégralité ou à tout du moins de très grandes longueurs de conduite, préalablement à l'arrivée du bateau de pose.

Pour ce faire, la conduite rigide est enroulée sur elle-même selon un rayon de courbure supérieur à 150 mètres pour éviter de la déformer plastiquement, puis elle est déroulée et enroulée sur une bobine de stockage montée sur le bateau de pose amarré au quai. De la sorte l'enroulement de la conduite sur sa roue de stockage peut s'effectuer en continu et on élimine ainsi les temps de raccordement des tronçons.

Compte tenu des dimensions de la bobine de stockage du bateau de pose, de l'ordre de la dizaine de mètres, la conduite rigide est déformée plastiquement lors de l'enroulement.

Cependant, l'unité d'assemblage et de stockage des conduites rigides, (« spool base » en anglais) est trop important et pour y remédier, il a été imaginé d'enrouler la conduite rigide sur l'eau, en la déformant dans ses limites élastiques pour ne pas la déformer plastiquement. Ensuite, elle est transportée ainsi enroulée sur le lieu de pose.

Ces méthodes ont été décrites dans les documents WO 00/11388 et US 4 260 288.

Le premier document décrit la réalisation d'une conduite rigide par assemblage de tubes rigides puis la formation d'une spirale à la surface de l'eau grâce à des moyens de guidage flottants. La conduite rigide ainsi enroulée selon un plan moyen sensiblement parallèle à la surface de l'eau en formant un ensemble très grand d'environ 250 mètres de diamètre, est ensuite transportée par deux remorqueurs auprès du bateau de pose. Ce dernier est adapté à guider la conduite pour la déposer au fond de l'eau tandis que les remorqueurs l'entraînent et la déroulent en amont.

Le second document divulgue également la formation d'une conduite rigide qui est enroulée sur l'eau selon un plan parallèle à la surface de l'eau, au bord du quai sur des moyens d'enroulement flottants. Ces moyens d'enroulement flottants sont ensuite remorqués jusqu'au site de pose puis verticalisés pour dérouler la conduite.

Compte tenu des dimensions des ensembles formés par ces conduites rigides enroulées qui sont rendues nécessaires pour ne pas déformer plastiquement lesdites conduites, sans quoi elles doivent être redressées sur le bateau de pose, leur transport est peu économique. En effet, il nécessite une puissance importante pour traîner dans l'eau les conduites ainsi enroulées.

Toujours dans le but de réduire le temps d'immobilisation du bateau de pose et de transporter les conduites réalisées à terre sur le site de pose, mais en réduisant de façon significative les dimensions des conduites rigides telles qu'enroulées selon le document précédent, il a été imaginé, conformément au document US 4 117 692, de déformer plastiquement la conduite et de l'enrouler sur une bobine de stockage disposée horizontalement à la surface de l'eau.

Cependant, le transport de la conduite par l'entraînement dans l'eau de la bobine de stockage qui présente néanmoins une certaine résistance à l'eau durant son déplacement, est également peu économique.

De plus, dans ces procédés où la conduite rigide est déplacée dans l'eau, tout débris flottant à la surface est susceptible de l'endommager.

Pour y remédier, il a été imaginé, conformément au document EP 0 868 621, d'enrouler la conduite rigide sur une bobine de stockage montée sur un bateau en la déformant plastiquement ; la conduite étant ensuite transportée auprès du bateau de pose puis réenroulée sur une bobine de stockage du bateau de pose pour être ensuite déroulée au fond de l'eau.

Cependant, il s'avère que le transfert d'une bobine sur l'autre, en pleine mer est mal aisé, compte tenu du déplacement relatif des bateaux dû à la houle. De plus, si cette solution permet d'éviter l'immobilisation du bateau de pose , en revanche elle ne résout pas l'obligation d'avoir une base de fabrication à terre de type « spool base » avec les problèmes d'espace précités. Les problèmes de temps d'immobilisation sont alors reportés sur le bateau d'approvisionnement qui assure le transport de la conduite rigide, de la base de fabrication au bateau de pose.

Un objet de la présente invention est alors de fournir une installation de fabrication de conduite tubulaire rigide enroulée adaptée à être redressée et posée par un bateau de pose, l'installation permettant non seulement de réduire l'espace nécessaire à la production des conduites rigides mais aussi de diminuer au maximum le temps pendant lequel le bateau de pose n'est pas actif c'est-à-dire lorsqu'il ne dépose pas de conduite.

A cet effet, la présente invention propose une installation pour la fabrication d'une conduite tubulaire rigide enroulée, ladite conduite tubulaire rigide étant destinée à être installée par un navire de pose dans les fonds sous-marins pour transporter notamment des hydrocarbures ; ladite installation comportant une unité d'assemblage pour assembler une pluralité de tubes rigides bout à bout de façon à obtenir des tronçons et pour assembler lesdits tronçons de façon à former ladite conduite tubulaire rigide qui est destinée à être enroulée sur une bobine de stockage située sur ledit navire de pose en ayant subi une déformation plastique. Ladite installation comprend :
- des moyens de déformation et d'enroulement intermédiaires disposés sur des premiers moyens flottants distincts dudit navire de pose pour déformer plastiquement ladite conduite tubulaire rigide et l'enrouler sur lesdits moyens d'enroulement intermédiaires après que ladite conduite tubulaire rigide a été formée, lesdits moyens de déformation et d'enroulement intermédiaires comportant une bobine de stockage intermédiaire dont le diamètre du fût est supérieur au diamètre du fût de ladite bobine de stockage du bateau de pose et au diamètre maximal d'une dernière portion de conduite rigide susceptible d'être enroulée sur ladite bobine de stockage du bateau de pose; et,
- des moyens de connexion adaptés à relier ensemble lesdits premiers moyens flottants et ladite unité d'assemblage.

Ainsi, une caractéristique de l'invention réside dans le mode de stockage de la conduite tubulaire rigide à proximité de l'unité d'assemblage sur des moyens d'enroulement intermédiaires situés sur des premiers moyens flottants, la conduite rigide étant enroulée déformée plastiquement par les moyens de déformation, de sorte qu'elle occupe un espace relativement restreint. En outre, grâce aux moyens de connexion qui permettent de maintenir en position les premiers moyens flottants par rapport à l'unité d'assemblage, la conduite rigide est susceptible d'être parfaitement guidée depuis l'unité d'assemblage pour être enroulée précisément sur les moyens d'enroulement intermédiaires sans laisser d'espace libre de manière à stocker une longueur maximale de conduite rigide. Ensuite, le navire de pose est adapté à être positionné au regard d'une extrémité des premiers moyens flottants, opposée à l'autre extrémité qui est située à proximité de l'unité d'assemblage de façon à enrouler la conduite rigide sur une bobine de stockage du navire de pose. Pour ce faire, le chargement des moyens d'enroulement intermédiaires, via l'unité d'assemblage, est stoppé et la conduite rigide est déroulée et déformée de façon élastique puis guidée vers le navire de pose pour être réenroulée sur la bobine de stockage et de pose du navire de pose.

Ce transfert s'effectue avantageusement sans nécessiter de redressement de la conduite préalablement à son réenroulement sur la bobine de stockage du bateau de pose.

Par ailleurs, Le fût est de forme cylindrique et présente des joues à chacune de ses extrémités pour contenir les spires de la conduite rigide enroulée.

Aussi, lors du transfert de la conduite, de la bobine de stockage intermédiaire vers la bobine de stockage et de pose, la conduite ne subit aucun redressement, c'est à dire aucune déformation plastique opposée à la déformation plastique conférée à la conduite lors de l'enroulement sur la bobine de stockage intermédiaire.

Par ailleurs, on peut noter que la capacité de stockage des moyens d'enroulement intermédiaires (mesurée par exemple en poids) est avantageusement au moins égale à la capacité de stockage du bateau de pose, sachant que certains bateaux sont susceptibles de présenter plusieurs bobines de pose.

Selon un mode de mise en oeuvre de l'invention particulièrement avantageux, ladite entité d'assemblage est montée sur des seconds moyens flottants. De la sorte, non seulement les premiers moyens flottants sur lesquels reposent les moyens d'enroulement intermédiaires sont susceptibles d'être rapportés mais l'unité d'assemblage est aussi adaptée à être amarrée au bord d'un quai sans qu'il y ait besoin de prévoir d'équipement particulier sur ce quai.

Ainsi, l'installation est complètement mobile sur l'eau et elle peut être remorquée et amarrée dans le port le plus proche du site de pose des conduites.

Selon un mode de réalisation particulier lesdits seconds moyens flottants présentent une longueur comprise entre 40 et 120 mètres, par exemple 50 mètres pour assembler les tubes rigides d'abord par quatre pour former des tronçons de conduites puis pour assembler les tronçons et constituer la conduite rigide. En outre, une telle dimension permet de disposer sans inconvénient les moyens de traitement et de recouvrement de la conduite destinés à sa protection.

Préférentiellement, lesdits moyens de connexion sont montés articulés sur lesdits premiers moyens flottants et sur ladite entité d'assemblage pour permettre le déplacement relatif desdits premiers moyens flottants et de ladite entité d'assemblage au moins selon une direction verticale. Ainsi, il est possible de charger fortement les premiers moyens flottants en enroulant une grande longueur de conduite rigide sur les moyens d'enroulement intermédiaires sans craindre l'enfoncement desdits premiers moyens flottants dans l'eau par rapport à l'unité d'assemblage.

Selon un autre mode de réalisation particulièrement avantageux de l'invention, lesdits moyens de connexion comprennent des moyens d'accrochage verrouillables de façon à obtenir des moyens de connexion amovibles. Grâce à cette caractéristique, d'une part il est possible d'escamoter les moyens de connexion et transporter indépendamment l'un de l'autre les moyens flottants et d'autre part, il est possible de charger plusieurs premiers moyens flottants distincts les uns des autres et. comportant chacun des moyens d'enroulement intermédiaires, en désolidarisant les moyens de connexion et des premiers moyens flottants et en les re-solidarisant ensuite à d'autres premiers moyens flottants. Ainsi, il est possible de constituer des stocks de conduites rigides enroulées prêtes à être transférées.

Avantageusement, lesdits moyens de connexion sont construits en treillis de sorte que le rapport poids sur rigidité des moyens de connexion est considérablement diminué et qu'il est possible de faire passer notamment la conduite rigide à travers les moyens de connexion.

Préférentiellement, les moyens d'enroulement intermédiaires comprennent une bobine de stockage montée verticalement sur lesdits premiers moyens flottants qui est adaptée à être entraînée en rotation autour de son axe disposé horizontalement pour recevoir ladite conduite tubulaire rigide.

Selon un mode avantageux de mise en oeuvre de l'invention, lesdits premiers moyens flottants comportent des ballasts pour lester lesdits premiers moyens flottants en fonction de la longueur de conduite tubulaire rigide enroulée sur lesdits moyens d'enroulement. Ainsi, bien que les moyens de connexion autorisent un déplacement vertical relatif des premiers moyens flottants par rapport à l'unité d'assemblage, il est préférable de maintenir les premiers moyens flottants dans une position relativement fixe pour guider selon une direction sensiblement constante la conduite rigide, depuis l'unité d'assemblage, vers les moyens d'enroulement. En vidant les ballasts durant le chargement les premiers moyens flottants sont allégés et cet allègement compense le poids de la conduite.

En outre, de façon avantageuse, les premiers moyens flottants sont constitués d'une barge ou d'un bâtiment à coque stable, auquel cas la présence des ballasts revêt moins d'importance.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique de dessus montrant une installation conforme à l'invention ;
- la Figure 2 est une section transversale selon II-II d'un élément de l'installation représentée sur la Figure 1 ;
- la Figure 3 est une vue schématique partielle de côté de l'installation représentée sur la Figure 1 ;
- la Figure 4 est une section selon IV-IV d'un élément représenté sur la Figure 3 ; et,
- la Figure 5 est une vue schématique générale de côté montrant le fonctionnement de l'installation illustrée sur la Figure 1.

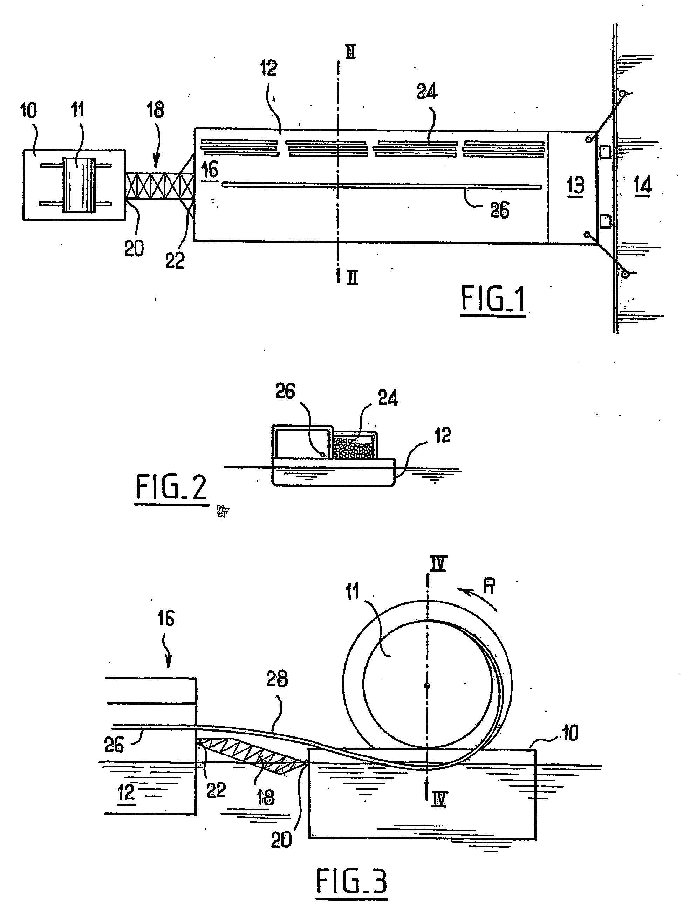

La Figure 1 illustre une installation de production de conduite tubulaire rigide enroulée conforme à l'invention. Dans la suite de la description la conduite tubulaire rigide sera simplement dénommée conduite, pour la clarté de l'exposé.

L'installation représentée sur la Figure 1 en vue de dessus, comporte des premiers moyens flottants 10 constitués d'une première barge supportant une bobine de stockage intermédiaire 11 et des seconds moyens flottants 12 composés ici d'une seconde barge sur laquelle sont élaborées des conduites, les barges 10 et 12 étant à flot par exemple dans un port. La première barge 10 présente une longueur comprise entre 15 et. 45 mètres, par exemple 30 mètres, et la seconde barge 12 présente une longueur comprise entre 40 et 140 mètres, par exemple 120 mètres.

Une première extrémité 13 de la seconde barge 12 est amarrée à un quai 14 et la première barge 10 est reliée à la seconde extrémité 16 de la seconde barge 12 par l'intermédiaire de moyens de connexion 18. La première extrémité 13 est reliée au quai 14 de façon à stabiliser la seconde barge 12 sensiblement perpendiculairement par rapport au quai 14 et ce, durant la production de la conduite que l'on décrira ci-après.

En outre, les moyens de connexion 18, de forme générale parallélépipédique, permettent de maintenir la première barge 10 alignée dans le prolongement de la seconde barge 12. En revanche, leurs extrémités sont montées articulées respectivement sur la première barge 10 et sur la seconde barge 12 autour d'axes horizontaux, 20 et 22, parallèles entre eux. Comme on l'expliquera plus en détail dans la description qui va suivre, ces articulations permettent le déplacement relatif des barges 10, 12 l'une par rapport à l'autre selon un axe vertical perpendiculaire au plan de la Figure 1. Bien évidemment, un même résultat pourrait être obtenu avec des moyens de connexion constitués d'un parallélépipède déformable dont les extrémités présenteraient, chacune, quatre points de fixation sur chacune des barges 10, 12, les points de fixation n'étant pas situés sur un même axe.

La seconde barge 12, que l'on retrouve en section verticale sur la Figure 2, comporte un stock 24 de tubes rigides et des moyens d'assemblage, non représentés, de ces tubes rigides. Ils sont tout d'abord soudés entre eux, bout à bout, pour former des tronçons 26 de conduite. Au préalable, un tube de protection, généralement en matière plastique, est éventuellement inséré dans le tube rigide pour protéger sa paroi interne.

Ensuite, des tronçons 26 de conduite sont assemblés à leur tour pour former la conduite au fur et à mesure qu'elle est entraînée en translation vers la première barge 10 pour être enroulée sur la bobine de stockage intermédiaire 11 comme on va l'expliquer dans la suite de la description. La conduite est recouverte d'un revêtement de protection la préservant notamment de la corrosion. Ainsi, après que les soudures des tronçons 26 sont réalisés, un raccord de revêtement est effectué pour assurer sa continuité du revêtement sur la conduite.

En outre, la seconde barge 12 comporte des moyens de guidage non représentés permettant de guider le tronçon de conduite 26 lorsque, raccordé à la portion de conduite déjà enroulée, il est entraîné en translation vers la première barge 10. Le raccordement du tronçon 26 à la portion de conduite enroulée est réalisé par soudage sur la seconde barge 12 au voisinage de son extrémité 16. Bien évidemment, les moyens d'enroulage, que l'on va décrire en référence à la Figure 3, sont à l'arrêt durant cette phase de raccordement.

On retrouve sur la Figure 3, en vue de côté, la première barge 10 et l'extrémité 16 de la seconde barge 12 avec laquelle elle est alignée. Les deux barges 10, 12 sont reliées ensemble par les moyens de connexion 18 formés d'une construction en treillis. Cette construction présente l'avantage d'être résistante en élongation et au flambage malgré un poids relativement faible, de sorte que la position relative des deux barges 10, 12 est maintenue constante selon leur axe longitudinal.

En outre, apparaissent sur la Figure 3, les axes horizontaux, 20, 22 reliant respectivement, une extrémité des moyens de connexion 18 à la première barge 10 et l'autre extrémité des moyens de connexion 18 à l'extrémité 16 de la seconde barge 10. Les extrémités des moyens de connexion 18 sont montés pivotantes sur chacune des barges, de sorte qu'elles restent solidaires l'une de l'autre malgré l'allègement de la seconde barge 12 au détriment de la première barge 10 qui tend à les entraîner dans des directions verticales opposées.

Par ailleurs, grâce à des moyens d'accrochage verrouillables non représentés, montés à au moins une extrémité des moyens de connexion 18, les première 10 et seconde barges 12 sont aisément désolidarisables. Cette possibilité est en particulier intéressante pour enrouler des conduites sur plusieurs bobines de stockage intermédiaires montées sur plusieurs premières barges différentes que l'on déplace successivement après chargement.

Les tronçons de conduite 26 sont assemblés à la portion de conduite 28 déjà engagée et au moins partiellement enroulée sur la bobine de stockage intermédiaire 11.

La conduite est déformée plastiquement lors de son enroulement, pour ce faire, la portion de conduite 28 est guidée en translation, sensiblement tangentiellement à la bobine de stockage intermédiaire 11, qui est entraînée en rotation dans le sens de la flèche R. De la sorte, la bobine de stockage intermédiaire 11 déforme plastiquement la conduite 28 en l'enroulant autour de son fût puis par couches successives.

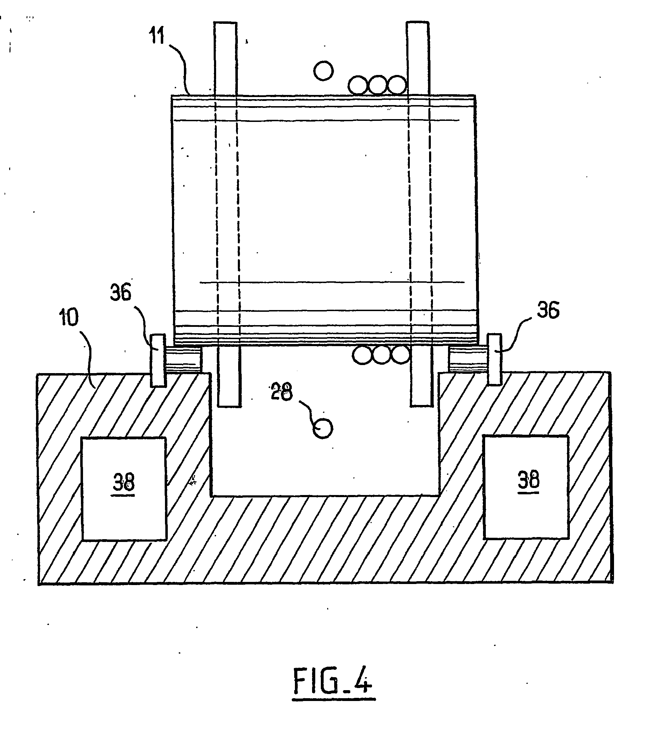

Ainsi, tandis que les tronçons de conduite 26 sont assemblés, la conduite 28 est entraînée, au moins séquentiellement pour permettre le raccordement des tronçons de conduite 26, et elle est enroulée sur la bobine de stockage intermédiaire 11 que l'on retrouve en section verticale sur la Figure 4, montée sur la première barge 10.

De plus, la bobine de stockage intermédiaire 11 comporte un tensionneur trancaneur, non représenté, permettant de réaliser un enroulement régulier de la conduite sans laisser d'espace libre.

La bobine de stockage intermédiaire est disposée sur la première barge 10 en appui sur des galets 36, pour la guider en rotation.

Par ailleurs, on a représenté sur cette Figure 4, des ballasts 38 ménagés dans la première barge 10 qui sont destinés à limiter les variations d'enfoncement dans l'eau de la première barge 10 en fonction du taux de chargement de la bobine de stockage intermédiaire 11, c'est-à-dire en fonction de la longueur de conduite enroulée.

Pour ce faire, les ballasts sont remplis lorsque la bobine dé stockage intermédiaire 11 est vide et ils sont vidés progressivement durant l'enroulement de la conduite. Ainsi, la première barge 10 tend à s'enfoncer dans l'eau lorsque la bobine de stockage intermédiaire 11 est chargée puisque le poids de la première barge 10 s'accroît et cet enfoncement est compensé par l'allègement de la barge en vidant les ballasts.

Cependant, la première barge 10 peut être remplacée par des moyens flottants à coque stable, auquel cas les ballasts ne sont plus absolument nécessaires puisque les moyens flottants sont plus stables qu'une barge.

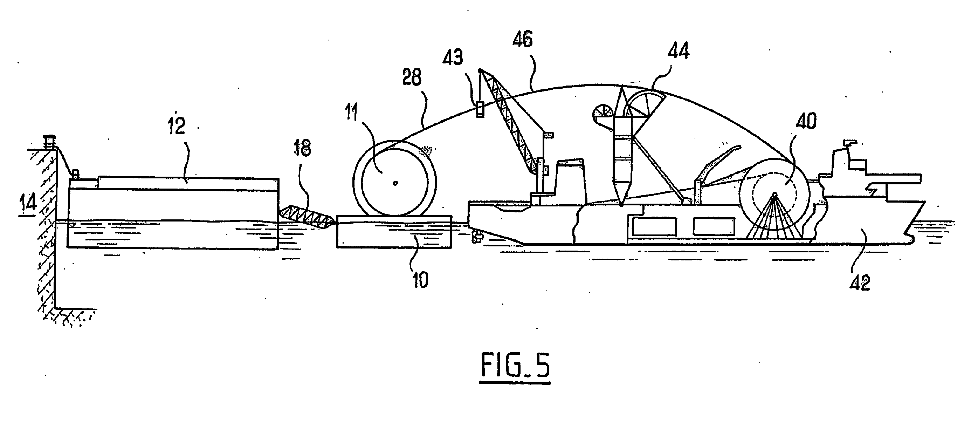

On se référera maintenant à la Figure 5 pour décrire le chargement de la conduite enroulée 28 sur la bobine de stockage intermédiaire 11 vers une bobine de stockage 40 d'un bateau de pose 42.

On comprend que lors du transfert de la conduite 28 vers le bateau de pose, on cesse de charger la bobine de stockage intermédiaire 11, notamment si les barges 10, 12 sont accouplées. De plus, l'intérêt d'une telle installation réside dans la possibilité de stocker une conduite complète dont le temps de transfert sur le bateau de pose est moindre que le temps de production de la conduite, car ce transfert s'effectue en continu.

Sur la Figure 5, le bateau de pose 42 est immobilisé dans le prolongement de la première barge 10, la bobine de stockage 40 du bateau de pose étant orientée dans la direction de la bobine de stockage intermédiaire 11 pour que les deux plans moyens qu'elles définissent soient sensiblement confondus. L'extrémité de la conduite 28 correspondant à la dernière extrémité non raccordée du dernier tronçon de conduite a été entraîné jusqu'à la bobine de stockage 40 du bateau de pose 42 par des moyens de levage et de déplacement, par exemple une grue dont l'extrémité est munie d'une bride de serrage anti-retour 43 (clamp), et elle est en appui sur des moyens de guidage 44 du bateau de pose 42. La bride de serrage anti-retour 43 comporte des moyens coniques, par exemple, et elle est maintenue en position, traversée par la conduite 28, durant le temps de transfert pour la maintenir et éviter son retour élastique, notamment en cas de rupture.

Par ailleurs, des tensionneurs non représentés et situés sur le bateau de pose permettent de contrôler l'approvisionnement de la bobine de stockage du bateau de pose.

Cette extrémité de la conduite 28 a été déformée plastiquement comme sa partie substantielle qui est enroulée sur la bobine de stockage intermédiaire 11 et elle est déformée élastiquement et entraînée à force vers la bobine de stockage 40.

Ainsi, la conduite 28 est adaptée à être déroulée de la bobine de stockage intermédiaire 11 pour être enroulée sur la bobine de stockage 40 du bateau de pose 42 en décrivant un arc 46 dont le rayon de courbure est supérieur à celui de la conduite enroulée. Cependant, la conduite 28 est uniquement déformée élastiquement durant le transfert et elle ne nécessite aucune formage complémentaire pour être réenroulée sur la bobine de stockage 40. Lorsque la conduite 28 est entièrement transférée sur la bobine de stockage 40 du bateau de pose 42, ce dernier peut rejoindre un site de pose tandis que la production de conduites enroulées peut reprendre.

Par ailleurs, l'installation conforme à l'invention étant montée sur des moyens flottants, elle peut être remorquée et amarrée où on le souhaite et de préférence, non loin du site de pose des conduites.

Selon un mode de mise en oeuvre de l'invention particulièrement avantageux, l'installation comprend en outre un bateau de pose dont la bobine de stockage permet l'enroulement de ladite conduite avec un rayon de courbure inférieur au rayon de courbure de ladite conduite enroulée sur lesdits moyens d'enroulement intermédiaires. Pour ce faire, le diamètre du fût des moyens de stockage intermédiaire 11, est supérieur au diamètre du fût de la bobine de stockage du bateau de pose, et de préférence supérieur au diamètre de la dernière spire enroulée sur la bobine de stockage du bateau de pose.

Grâce à cette caractéristique, aucun redresseur n'est nécessaire lors du transfert de la conduite rigide, car la conduite peut être déformée plastiquement dans le sens d'une diminution de son rayon de courbure avec la simple motorisation des moyens d'enroulement.

Par ailleurs, la présente invention concerne également un procédé de fabrication d'une conduite tubulaire rigide enroulée, ladite conduite tubulaire rigide étant destinée à être installée par un navire de pose dans les fonds sous-marins pour transporter notamment des hydrocarbures, ledit procédé comportant une étape d'assemblage d'une pluralité de tubes rigides bout à bout de façon à obtenir des tronçons et d'assemblage desdits tronçons de façon à former ladite conduite tubulaire rigide qui est destinée à être enroulée sur une bobine de stockage située sur ledit navire de pose en ayant subi une déformation plastique.

Ledit procédé, tel que défini dans la revendication 10, comprend les étapes suivantes :
- on déforme plastiquement et on enroule ladite conduite tubulaire rigide sur des premiers moyens flottants (10) distincts dudit navire de pose après que ladite conduite tubulaire rigide (28) a été formée ; et,
- on transfère la conduite tubulaire rigide enroulée, desdits premiers moyens flottants audit navire de pose en la réenroulant sur ladite bobine de stockage.

Ce transfert s'effectue avantageusement sans nécessiter de redressement de la conduite.

## Revendications

1. Installation pour la fabrication d'une conduite tubulaire rigide (28) enroulée, ladite conduite tubulaire rigide étant destinée à être installée par un navire de pose (42) dans les fonds sous-marins pour transporter notamment des hydrocarbures, ladite installation comportant une unité d'assemblage pour assembler une pluralité de tubes rigides (24) bout à bout de façon à obtenir des tronçons (26) et pour assembler lesdits tronçons de façon à former ladite conduite tubulaire rigide (28) qui est destinée à être enroulée sur une bobine de stockage (40) située sur ledit navire de pose (42) en ayant subi une déformation plastique, **caractérisé en ce qu'**elle comprend :
- des moyens de déformation et d'enroulement intermédiaires (11) disposés sur des premiers moyens flottants (10) distincts dudit navire de pose pour déformer plastiquement ladite conduite tubulaire rigide (28) et l'enrouler sur lesdits moyens d'enroulement intermédiaires (11) après que ladite conduite tubulaire rigide (28) a été formée, lesdits moyens de déformation et d'enroulement intermédiaires (11) comportant une bobine de stockage intermédiaire dont le diamètre du fût est supérieur au diamètre du fût de ladite bobine de stockage (40) du bateau de pose (42) et au diamètre maximal d'une dernière portion de conduite rigide susceptible d'être enroulée sur ladite bobine de stockage du bateau de pose (42) ; et,
- des moyens de connexion (18) adaptés à relier ensemble lesdits premiers moyens flottants (10) et ladite unité d'assemblage.

2. Installation selon la revendication 1, **caractérisée en ce que** ladite unité d'assemblage est montée sur des seconds moyens flottants (12).

3. Installation selon la revendication 2, **caractérisée en ce que** lesdits seconds moyens flottants (12) présentent une longueur comprise entre 40 et 120 mètres.

4. Installation selon l'une quelconque des revendications 1 à 3, **caractérisée en ce que** lesdits moyens de connexion (18) sont montés articulés sur lesdits premiers moyens flottants (10) et sur ladite unité d'assemblage pour permettre le déplacement relatif desdits premiers moyens flottants (10) et de ladite entité d'assemblage (12) au moins selon une direction verticale.

5. Installation selon la revendication 4, **caractérisé en ce que** lesdits moyens de connexion (18) comprennent des moyens d'accrochage verrouillables de façon à obtenir des moyens de connexion amovibles.

6. Installation selon l'une quelconque des revendications 1 à 5, **caractérisée en ce que** lesdits moyens de connexion (18) sont construits en treillis.

7. Installation selon l'une quelconque des revendications 1 à 6, **caractérisée en ce que** lesdits moyens d'enroulement intermédiaires (11) comprennent une bobine de stockage intermédiaire montée verticalement sur lesdits premiers moyens flottants (10) qui est adaptée à être entraînée en rotation autour de son axe disposé horizontalement pour recevoir ladite conduite tubulaire rigide (28).

8. Installation selon l'une quelconque des revendications 1 à 7, **caractérisée en ce que** lesdits premiers moyens flottants (10) comportent des ballasts (38) pour lester lesdits premiers moyens flottants (10) en fonction de la longueur de conduite tubulaire rigide enroulée sur lesdits moyens d'enroulement intermédiaire (11).

9. Installation selon l'une quelconque des revendications 1 à 8, **caractérisée en ce que** lesdits premiers moyens flottants (10) sont constitués d'une barge ou d'un bâtiment à coque stable.

10. Procédé de fabrication d'une conduite tubulaire rigide (28) enroulée, ladite conduite tubulaire rigide étant destinée à être installée par un navire de pose (42) dans les fonds sous-marins pour transporter notamment des hydrocarbures, ledit procédé étant du type selon lequel, on assemble une pluralité de tubes rigides (24) bout à bout de façon à obtenir des tronçons (26) et on assemble lesdits tronçons de façon à former ladite conduite tubulaire rigide (28), ladite conduite tubulaire rigide (28) étant destinée à être enroulée sur une bobine de stockage (40) située sur ledit navire de pose (42) en ayant subi une déformation plastique, **caractérisé en ce qu'**il comprend les étapes suivantes :
- on déforme plastiquement et on enroule ladite conduite tubulaire rigide (28) sur des moyens d'enroulement intermédiaires (11) situés sur des premiers moyens flottants (10) distincts dudit navire de pose, après que ladite conduite tubulaire rigide (28) a été formée, lesdits moyens d'enroulement intermédiaires (11) comportant une bobine de stockage intermédiaire dont le diamètre du fût est supérieur au diamètre du fût de ladite bobine de stockage (40) du bateau de pose (42); et,
- on transfère la conduite tubulaire rigide enroulée, desdits premiers moyens flottants (10) audit navire de pose en la réenroulant sur ladite bobine de stockage, le diamètre du fût des moyens de stockage intermédiaire (11) étant supérieur au diamètre de la dernière spire enroulée sur la bobine de stockage du bateau de pose (42).

## Claims

1. Installation for manufacturing a wound rigid tubular pipe (28), the said rigid tubular pipe being intended to be installed subsea by a laying ship (42) to carry hydrocarbons in particular, the said installation comprising an assembly unit for assembling a plurality of rigid tubes (24) end to end to obtain lengths (26)and for assembling the said lengths in such a way as to form the said rigid tubular pipe (28)which is intended to be wound onto a storage reel (40)situated on the said laying ship (42) having undergone plastic deformation, **characterized in that** this installation comprises:
- intermediate winding and deforming means (11) arranged on first floating means (10) distinct from the said laying ship to plastically deform the said rigid tubular pipe (28) and wind it onto the said intermediate winding means (11) after the said rigid tubular pipe (28) has been formed; said intermediate winding and deforming means (11) comprising an intermediate storage reel the drum diameter of which is greater than the drum diameter of the said storage reel (40) of the laying boat (42), and greater than the maximum diameter of a last portion of rigid pipe likely to be wound onto the said storage reel of the laying boat (42),and
- connecting means (18) designed to connect together the said first floating means (10) and the said assembly unit.

2. Installation according to Claim 1, **characterized in that** the said assembly unit is mounted on second floating means (12).

3. Installation according to Claim 2, **characterized in that** the said second floating means (12) have a length of between 40 and 120 metres.

4. Installation according to any one of Claims 1 to 3, **characterized in that** the said connecting means (18) are mounted articulated on the said first floating means (10) and on the said assembly unit to allow relative movement of the said first floating means (10) and of the said assembly entity (12) at least in a vertical direction.

5. Installation according to Claim 4, **characterized in that** the said connecting means (18) comprise catching means that can be locked so as to obtain removable connecting means.

6. Installation according to any one of Claims 1 to 5, **characterized in that** the said connecting means (18) are built with a lattice configuration.

7. Installation according to any one of Claims 1 to 6, **characterized in that** the said intermediate winding means (11) comprise an intermediate storage reel mounted vertically on the said first floating means (10) and which is designed to be driven in rotation about its horizontally-arranged axis so as to wound the said rigid tubular pipe (28).

8. Installation according to any one of Claims 1 to 7, **characterized in that** the said first floating means (10) comprise ballast weight tanks (38) to weigh down the said first floating means (10) according to the length of rigid tubular pipe wound onto the said intermediate winding means (11).

9. Installation according to any one of Claims 1 to 8, **characterized in that** the said first floating means (10) consist of a barge or of a vessel with a stable hull.

10. Method for manufacturing a wound rigid tubular pipe (28), the said rigid tubular pipe being intended to be installed subsea by a laying ship (42) to carry hydrocarbons in particular, the said method being of the type comprising a step of assembling a plurality of rigid tubes (24) end to end to obtain lengths (26) and of assembling the said lengths in such a way as to form the said rigid tubular pipe (28), said rigid tubular pipe (28) being intended to be wound onto a storage reel (40) situated on the said laying ship (42) having undergone plastic deformation, **characterized in that** this method comprises the following steps:
- the said rigid tubular pipe is plastically deformed then wound onto intermediary winding means (11) provided on first floating means (10) separate from the said laying ship after the said rigid tubular pipe (28) has been formed; said intermediary winding means (11) comprising an intermediary storing reel whose drum diameter is greater than the drum diameter of said storing reel (40) of the laying ship (42), and
- the wound rigid tubular pipe is transferred from the said first floating means (10) to the said laying ship by rewinding it onto the said storage reel, the drum diameter of the intermediary winding means (11) being greater than the diameter of the last turn wound on the storing reel of the lay ship (42).

## Patentansprüche

1. Anlage zur Herstellung einer aufgerollten starrgewalzten Rohrleitung (28), wobei besagte starrgewalzte Rohrleitung dazu bestimmt ist, von einem Installationsschiff (42) auf dem Tiefseegrund installiert zu werden, um insbesondere Mineralöl zu transportieren, wobei besagte Anlage eine Montageinheit aufweist zur Montage einer Vielzahl von starrgewalzten Rohrleitungen hintereinander (24), dergestalt dass man Teilstrecken (26) erhält und um die genannten Teilstrecken so zusammenzufügen, dass man besagte starrgewalzte Rohrleitung erhält (28), die dazu bestimmt ist, auf eine Lagerrolle (40) aufgerollt zu werden, die sich auf besagtem Installationsschiff (42) befindet, nachdem sie einer plastischen Verformung unterzogen wurde, **dadurch gekennzeichnet, dass** diese folgendes umfasst:
- Verformungsvorrichtungen und Zwischen-Aufrollvorrichtungen (11), angeordnet auf ersten Schwimmvorrichtungen (10) und unabhängig von besagtem Installationsschiff, um die besagte starrgewalzte Rohrleitung plastisch zu verformen (28) und diese auf besagte Zwischen-Aufrollvorrichtungen aufzurollen (11) nachdem besagte starrgewalzte Rohrleitung (28) gebildet wurde, wobei besagte Verformungsvorrichtungen und Zwischen-Aufrollvorrichtungen (11) eine Lagerrolle zum Zwischenlagern umfassen, deren Lagerbehälterdurchmesser größer ist als der Durchmesser des Lagerbehälters der besagten Lagerrolle (40) des Installationsschiffs (42) und größer ist als der maximale Durchmesser einer letzten Teilstrecke der starrgewalzten Rohrleitung, die dazu bestimmt ist auf besagte Lagerrolle des Installationsschiffs (42) aufgerollt zu werden, und
- Verbindungsvorrichtungen (18), die dazu geeignet sind besagte erste Schwimmvorrichtungen (10) und besagte Montageinheit miteinander zu verbinden.

2. Installation laut Anspruch 1 **dadurch gekennzeichnet, dass** besagte Montageeinheit auf zweite Schwimmvorrichtungen (12) montiert ist.

3. Installation laut Anspruch 2, **dadurch gekennzeichnet, dass** die besagten zweiten Schwimmvorrichtungen (12) eine Länge zwischen 40 und 120 Metern aufweisen.

4. Installation laut einem der Ansprüche 1 bis 3, **dadurch gekennzeichnet, dass** die besagten Verbindungsvorrichtungen (18) ausschwenkbar/flexibel auf besagten ersten Schwimmvorrichtungen (10) und auf besagter Montageeinheit montiert sind, um die relative Verschiebung besagter erster Schwimmvorrichtungen (10) und besagter Montageeinheit (12) mindestens in eine vertikale Richtung zu ermöglichen.

5. Installation laut Anspruch 4, **dadurch gekennzeichnet, dass** besagte Verbindungsvorrichtungen (18) abschließbare Einhängevorrichtungen umfassen, so dass man abnehmbare Verbindurigsvorrichtungen erhält.

6. Installation laut einem der Ansprüche 1 bis 5, **dadurch gekennzeichnet, dass** besagte Verbindungsvorrichtungen (18) aus Gitterwerk bestehen.

7. Installation laut einem der Ansprüche 1 bis 6, **dadurch gekennzeichnet, dass** besagte Zwischen-Aufrollvorrichtungen (11) eine vertikal auf besagte erste Schwimmvorrichtungen (10) montierte Rolle für die Zwischenlagerung umfassen, die dazu geeignet ist durch Rotation um die horizontal angeordnete Achse angetrieben zu werden, um besagte starrgewalzte Rohrleitung (28) aufzunehmen.

8. Installation laut einem der Ansprüche 1 bis 7, **dadurch gekennzeichnet, dass** besagte erste Schwimmvorrichtungen (10) Ballast (38) umfassen, um besagte erste Schwimmvorrichtungen (10) zu beschweren, entsprechend der Länge der auf besagte Zwischen-Aufrollvorrichtungen (11) aufgerollten starrgewalzten Rohrleitung.

9. Installation laut einem der Ansprüche 1 bis 8, **dadurch gekennzeichnet, dass** besagte erste Schwimmvorrichtungen (10) aus einem Flachboot/Frachtkahn oder einem Schiff mit stabilem Schiffskörper bestehen.

10. Herstellungsverfahren für eine aufgerollte starrgewalzte Rohrleitung (28), wobei besagte starrgewalzte Rohrleitung dazu bestimmt ist, von einem Installationsschiff (42) auf dem Tiefseegrund installiert zu werden, um insbesondere Mineralöl zu transportieren, wobei besagtes Verfahren derart ist, dass eine Vielzahl von starrgewalzten Rohrleitungen (24) hintereinander montiert werden, dergestalt dass man Teilstrecken (26) erhält und die genannten Teilstrecken zusammengefügt werden, um so besagte starrgewalzte Rohrleitung zu erhalten (28), die dazu bestimmt ist, auf eine Lagerrolle (40) aufgerollt zu werden, die sich auf besagtem Installationsschiff (42) befindet und einer plastischen Verformung unterzogen wurde, und **dadurch gekennzeichnet ist, dass** das Verfahren folgende Schritte umfasst:
- plastische Verformung und Aufrollen besagter starrgewalzter Rohrleitung (28) auf Zwischen-Aufrollvorrichtungen (11), die sich auf ersten Schwimmvorrichtungen (10) befinden, unabhängig von besagtem Installationsschiff, nachdem besagte starrgewalzte Rohrleitung (28) gebildet wurde, wobei besagte Zwischen-Aufrollvorrichtungen (11) eine Rolle für die Zwischenlagerung umfassen, deren Lagerbehälterdurchmesser größer ist als der Durchmesser des Lagerbehälters der besagten Lagerrolle (40) des Installationsschiffs (42) und
- Überführung der aufgerollten starrgewalzten Rohrleitung von den besagten ersten Schwimmvorrichtungen (10) auf besagtes Installationsschiff, indem diese erneut auf besagte Lagerrolle aufgerollt wird, wobei der Durchmesser des Lagerbehälters der Zwischenlagerungsvorrichtungen (11) größer ist als die letzte aufgerollte Windung auf der Lagerrolle des Installationsschiffes (42).
